(19) Europäisches Patentamt / European Patent Office / Office européen des brevets

(11) **EP 4 390 588 A1**

(12) **EUROPEAN PATENT APPLICATION**
published in accordance with Art. 153(4) EPC

(43) Date of publication:
**26.06.2024 Bulletin 2024/26**

(21) Application number: **22858054.4**

(22) Date of filing: **14.02.2022**

(51) International Patent Classification (IPC):
**G05B 19/418** (2006.01)    **G06Q 50/04** (2012.01)

(52) Cooperative Patent Classification (CPC):
**G05B 19/418; G06Q 50/04;** Y02P 90/02;
Y02P 90/30

(86) International application number:
**PCT/JP2022/005741**

(87) International publication number:
**WO 2023/021729 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.08.2021 JP 2021133570**

(71) Applicant: **DMG Mori Co., Ltd.**
**Yamatokoriyama-shi, Nara 639-1160 (JP)**

(72) Inventors:
• **IRINO Naruhiro**
**Yamatokoriyama-shi, Nara 639-1160 (JP)**
• **KAWAI Kengo**
**Yamatokoriyama-shi, Nara 639-1160 (JP)**

(74) Representative: **Keltie LLP**
**No. 1 London Bridge**
**London SE1 9BA (GB)**

(54) **MACHINING ENVIRONMENT ASSIST SYSTEM AND MACHINING ENVIRONMENT ASSIST METHOD**

(57)     A disclosed machining environment support system that provides a customer with suitability evaluation information regarding working machines and tools, with respect to a workpiece, the machining environment support system including: an input processing unit that inputs processing information regarding the workpiece; a selection processing unit that extracts working machines and tools suited to the processing information from a database and displays the same on a display unit in a selectable manner; and an output processing unit that generates and outputs the suitability evaluation information regarding the working machines and tools, based on the result of processing the workpiece using the selected working machines and tools based on the processing information. The selection processing unit is configured to display the working machines and tools determined as being owned by the customer based on attribute information registered in the database as well as the working machines and tools determined as not being owned by the customer, on the display unit in a selectable manner.

*FIG. 3*

EP 4 390 588 A1

**Description**

[Technical Field]

The present disclosure relates to a machining environment support system that suggests working machines, tools, and the like capable of recommended appropriate processing at the time of processing a workpiece using numerically controlled (NC) machine tools, and a machining environment support method.

[Background Art]

PTL 1 (International Publication WO00-12260) discloses an improved tool management method for accurately predicting the lifespans of tools at a simulation level before processing is actually performed and preventing tool breakage, chipping, and the like.

The tool management method includes a step of extracting tool information and cutting condition information from an NC program, a step of obtaining cutting status information from a processing simulation based on the NC program, a step of measuring the amount of abrasion of a tool during actual cutting, and a step of creating a tool abrasion database in which the tool cutting length and the tool abrasion amount are associated with one another, based on the information obtained in the foregoing steps.

PTL 2 (Japanese Laid-Open Patent Publication No. 2004-265321) discloses a processing system for processing information generation that can grasp the state of a computer-supported numerical control processing machine and give feedback regarding numerical value data in the optimum state to the computer-supported numerical control processing machine, and a processing information generation program.

The processing system is a processing system for processing information generation in which a computer-supported numerical control processing machine and a design computer conducting data collection and prediction control are connected to each other via a high-speed bus, the design computer includes: a processing database that stores working machine state parameters and other necessary data; a parameter acquisition unit that acquires the working machine state parameters of the computer-supported numerical control working machine and accumulates the same in the processing database, and performs data mining based on the accumulated working machine state parameters and stores the data in the processing database; a parameter analysis unit that captures the working machine state parameters acquired by the parameter acquisition unit, reads necessary data from the processing database, and analyzes the data; a design unit that generates numerical control data based on optimization data from the parameter analysis unit and design data from the processing database; and a prediction simulation unit that performs a processing information generation simulation based on the numerical control data from the design unit and the necessary data read from the processing database, and gives feedback regarding the numerical control data in the optimum state resulting from the simulation to the computer-supported numerical control processing machine.

[Citation List]

[Patent Literatures]

PTL 1: International Publication WO00-12260
PTL 2: Japanese Laid-Open Patent Publication No. 2004-265321

[Summary of Invention]

[Technical Problem]

The conventional technology described above is configured to execute a processing simulation on the actually operating working machines and tools, evaluate the lifespans of the tools before the processing based on the result of the simulation, or give feedback regarding the numerical control data in the optimum state based on the result of the simulation to the computer-supported numerical control processing machine.

However, the appropriate machining environment for processing target workpiece into a desired shape is not necessarily always available, and there are also cases where a machining environment using working machines and tools different from those in the current machining environment result in good products being produced.

That is, if machining environments including the current machining environment and other machining environments for processing target workpiece can be evaluated, it is possible to make effective facility plans corresponding to production plans of various products from various kinds of workpieces.

An object of the present disclosure is to provide a machining environment support system and a machining environment support method by which it is possible to obtain suitability evaluation information that serves as an index for preparing an appropriate machining environment.

[Solution to Problem]

A machining environment support system of the present disclosure is a machining environment support system that provides a customer with suitability evaluation information regarding a working machine and a tool for processing a workpiece to be evaluated, the machining environment support system includes: a database in which pluralities of working machines and tools are registered; an input processing unit that inputs processing information regarding the workpiece; a selection processing unit that extracts a working machine and a tool suited to the processing information from the database and displays the same on a display unit in a selectable manner; and an output processing unit that generates and outputs the suitability evaluation information regarding the working machine and tool, based on a result of processing the workpiece using the working machine and tool selected via the selection processing unit based on the processing information, wherein the working machines and tools are registered in the database together with attribute information for determining an ownership state of the customer, and the selection processing unit displays the working machine and tool determined as being owned by the customer based on the attribute information as well as the working machine and tool determined as not being owned by the customer, on the display unit in a selectable manner.

The working machines and tools including not only the working machines and tools owned by the customer but also the working machines and tools not owned by the customer are selected via the selection processing unit based on the processing information of the workpiece, and the workpiece is processed by the working machines and tools. From the results of the processing, suitability evaluation information can be obtained for each working machine and tool that constitute a machining environment of the workpiece, and appropriate working machines and tools can be selected based on the suitability evaluation information.

The selection processing unit preferably further displays a tool holder suited to the processing information in a selectable manner. The output processing unit is preferably configured to generate the suitability evaluation information regarding the working machine, tool, and tool holder, based on the result of processing the workpiece using the working machine, tool, and tool holder selected via the selection processing unit. The tool holder is preferably registered in the database together with attribute information for determining an ownership state of the customer, together with the working machines and the tools. The selection processing unit is preferably configured to display the working machine, tool, and tool holder determined as being owned by the customer based on the attribute information as well as the working machine, tool, and tool holder determined as not being owned by the customer, on the display unit in a selectable manner

The suitability evaluation information preferably includes a recommended cutting condition according to the working machines, tools, and tool holders.

The processing information preferably includes a material, pre-processing shape, and post-processing shape of the workpiece. The selection processing unit preferably includes a processing process analysis unit that analyzes the processing information and outputs a list of the working machine, tool, and tool holder suited to the processing information.

The suitability evaluation information preferably includes evaluation values of processing efficiency, tool lifespan, surface roughness, and processing accuracy at the time of processing the workpiece using the selected working machines, tools, and tool holders.

The output processing unit preferably displays the selected working machine, tool, and tool holder in order on the display unit, based on an evaluation value of the suitability evaluation information.

The working machines, tools, or tool holders displayed on the display unit by the output processing unit are preferably provided with link information for, upon being selected, guiding the customer to a guide website where a corresponding working machine, tool, or tool holder is sold, so that it is possible to swiftly prepare the processing environment based on the suitability evaluation information.

A machining environment support method of the present disclosure is a machining environment support method for providing a customer with suitability evaluation information regarding a working machine and a tool for processing a workpiece to be evaluated, the machining environment support method including: an input processing step of inputting processing information regarding the workpiece; a selection processing step of extracting a working machine and a tool suited to the processing information from a database in which pluralities of working machines and tools are registered, and displaying the same on a display unit in a selectable manner; and an output processing step of generating and outputting the suitability evaluation information regarding the working machine and tool, based on a result of processing the workpiece using the working machine and tool selected in the selection processing step based on the processing information, wherein the working machines and tools are registered in the database together with attribute information for determining an ownership state of the customer, and the selection processing step is preferably configured to display the working machine and tool determined as being owned by the customer based on the attribute information as well as the working machine and tool determined as not being owned by the customer, on the display unit in a selectable manner.

The selection processing step is preferably configured to display a tool holder suited to the processing information in a selectable manner. The output processing step is preferably configured to generate the suitability evaluation information regarding the working machine, tool, and tool holder, based on the result of processing the workpiece using the working machine, tool, and tool holder selected in the selection processing step. The tool holder is preferably registered in the database together with attribute information for determining an ownership state of the customer, together with the working machines and the tools. The selection processing step is preferably configured to display the working machine, tool, and tool holder determined as being owned by the customer based on the attribute information as well as the working machine, tool, and tool holder determined as not being owned by the customer, on the display step in a selectable manner.

The suitability evaluation information preferably includes a recommended cutting condition according to the working machines, tools, and tool holders.

The processing information preferably includes the material, pre-processing shape, and post-processing shape of the workpiece. The selection processing step preferably includes a processing process analysis step of analyzing the processing information and outputting a list of the working machines, tools, and tool holders suited to the processing information.

The suitability evaluation information preferably includes evaluation values of processing efficiency, tool lifespan, surface roughness, and processing accuracy at the time of processing the workpiece using the selected working machine, tool, and tool holder.

In the output processing step, the selected working machine, tool, and tool holder are preferably displayed in order on the display unit, based on an evaluation value of the suitability evaluation information.

The working machines, tools, or tool holders displayed on the display unit in the output processing step are preferably provided with link information for, upon being selected, guiding the customer to a guide website where a corresponding working machine, tool, or tool holder is sold, so that it is possible to swiftly prepare the processing environment based on the suitability evaluation information, and the guide website is preferably configured such that at least stock information, delivery date, and price are checkable.

[Advantageous Effects of Invention]

According to the present disclosure, it is possible to provide a machining environment support system and a machining environment support method by which it is possible to obtain suitability evaluation information that serves as an index for preparing an appropriate machining environment.

Although novel features of the present disclosure are described in the accompanying claims, the present disclosure will be more clearly understood both in configuration and contents, by the following detailed description with reference to the drawings, together with other objects and features of the present disclosure.

[Brief Description of Drawings]

Fig. 1 is an explanatory diagram of a machining environment support system.
Fig. 2 is an explanatory diagram showing a procedure of a machining environment support method.
Fig. 3 is an explanatory diagram of processing information regarding a workpiece W related to a processing shape.
Fig. 4 is an explanatory diagram of a selection screen for working machines, tools, and tool holders.
Fig. 5 is an explanatory diagram of suitability evaluation information.
Figs. 6A to 6C are explanatory diagrams showing processing conditions under which regenerative chatter vibration is likely to occur.
Figs. 7A to 7C are explanatory diagrams showing processing conditions under which regenerative chatter vibration is unlikely to occur.
Figs. 8A to 8C are diagrams showing processing modes of the workpiece W.
Fig. 9 is an explanatory diagram showing an edit mode of processing conditions.

[Description of Embodiments]

Hereinafter, a machining environment support system and a machining environment support method according to the present disclosure will be described. The machining environment described below refers to working machines, tools, tool holders, and processing conditions for processing a workpiece using the machines, tools, and tool holders. The processing conditions include a tool movement path, tool feed rate, and cutting speed, cutting width, cutting depth, and the like defined by the rotation speed of a main shaft, and the like.

The machining environment support system is a system that provides a customer with suitability evaluation information regarding working machines and tools that process a workpiece to be evaluated.

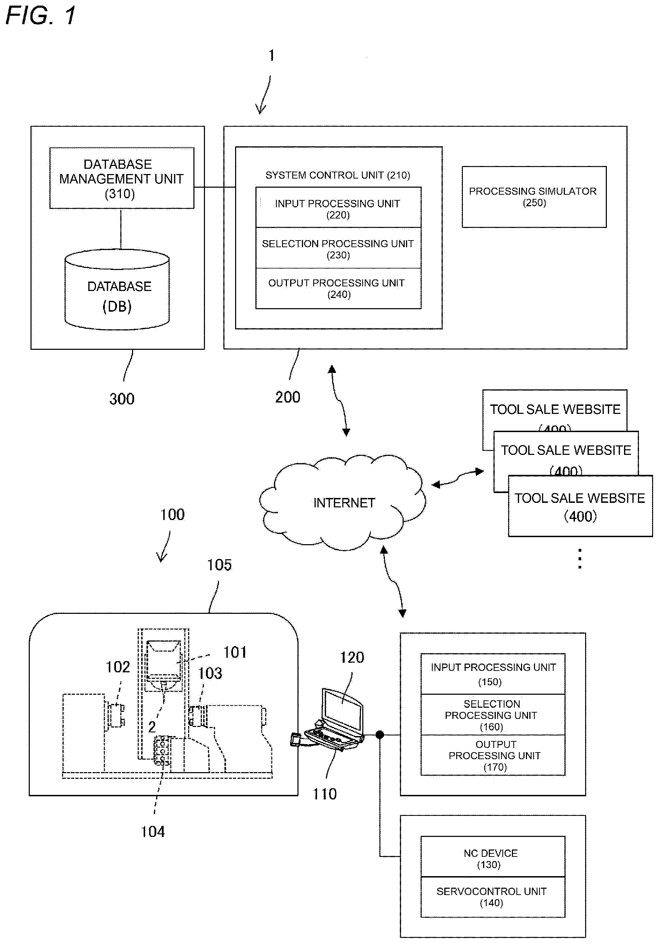

As shown in Fig. 1, a machining environment support system 1 includes an operation panel 110 provided in a working machine 100 owned by a customer, a server computer 200, and a database system 300 connected to the server computer 200. The database system 300 includes a database management unit 310, a database DB, sale websites 400 for parts including tools and tool holders, and the like.

The operation panel 110 and the server computer 200 are connected to each other so as to be communicable via a communication medium such as the Internet. In Fig. 1, the server computer 200 and the database system 300 are directly connected to one another, but the server computer 200 and the database system 300 may be connected via a communication medium such as the Internet.

The server computer 200 includes a system control unit 210 that comprehensively controls the machining environment support system and a processing simulator 250. The system control unit 210 includes functional blocks such as an input processing unit 220, a selection processing unit 230, and an output processing unit 240.

The input processing unit 220 is a functional block for inputting processing information regarding a workpiece. The selection processing unit 230 is a functional block that extracts the working machines, tools, and tool holders suited to the processing information from the database DB, and displays the same on a display unit in a selectable manner. The processing simulator 250 is a functional block that performs simulated processing of the workpiece using the working machines and tools selected via the selection processing unit 230. The output processing unit 240 is a functional block that generates and outputs suitability evaluation information regarding the working machines and tools based on the results of the simulated processing performed by the processing simulator 250.

These functional blocks are implemented by a CPU included in the server computer 200 executing application programs stored in a memory included the server computer 200.

The working machine 100 is constructed as a composite processing machine that includes a tool main shaft 101 movable in vertical and horizontal directions along a column installed on a bed, a first main shaft 102 for holding the workpiece, a second main shaft 103 that is disposed to face the first main shaft 102 and movable in the horizontal direction, a second blade rest 104 that is disposed to face the tool main shaft 101 between the first main shaft 102 and the second main shaft 103 and is movable in the vertical and horizontal directions, and a cover body 105 that covers the work space formed by the foregoing components.

The operation panel 110 is placed on the outside of the cover body 105. An NC device 130 that executes an NC program for NC control of the composite processing machine, a servocontrol unit 140 that servocontrols the tool main shaft 101, the first main shaft 102, the second main shaft 103, and the second blade rest 104 in response to instructions from the NC device 130, and the like are connected to the operation panel 110 via a communication cable.

The operation panel 110 is equipped with a CPU board and a memory board. When an application program stored in the memory board is executed by the CPU, an operation control unit for operating the working machine 100 including the servocontrol unit 140 is implemented, and an operation screen to be operated by the operator using the operation control unit is displayed on a display unit 120.

The operation panel 110 also has an application program interface incorporated therein for exchanging necessary information with the server computer 200. The application program interface is constituted by an input processing unit 150, a selection processing unit 160, and an output processing unit 170 that can perform input and output processing on the functional blocks of the input processing unit 220, the selection processing unit 230, and the output processing unit 240 included in the server computer 200. In the present embodiment, the composite processing machine is exemplified as the working machine 100. However, the working machine 100 may be a working machine other than the composite processing machine, such as a machining center or a lathe. In addition, instead of the operation panel 110 included in the working machine 100, the input processing unit 150, the selection processing unit 160, the output processing unit 170 may be implemented in a desktop computer or laptop computer owned by the customer.

The database DB managed by the database management unit 310 is a relational database in which customer management information, working machine information, tool information, and tool holder information are registered in association with each other. Each of a plurality types of working machines included in the working machine information is provided with attribute information such as owner, acquisition time, and maintenance information. Each of a plurality of types of tools included in the tool information is provided with attribute information such as owner, acquisition time, price, and seller. Each of a plurality of types of tool holders included in the tool holder information is provided with attribute information such as owner, acquisition time, price, and seller. The working machine information, the tool information, and the tool holder information are provided with link information for guiding the operator to the sale websites 400 where the machines and tools are sold. At the sale websites 400, at least stock information, delivery times, and prices can be checked.

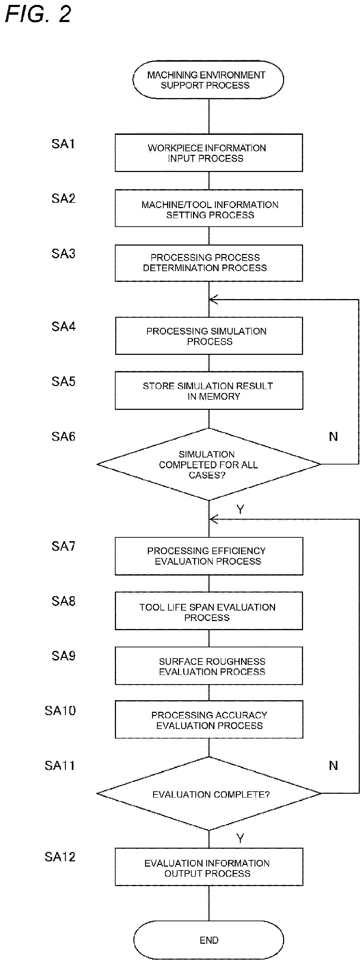

Fig. 2 shows steps of a machining environment support method executed by the machining environment support system 1 described above.

An input process step of inputting processing information regarding a workpiece to be evaluated is executed via the input processing units 150, 220 (SA1). The processing information regarding the workpiece refers to the material, initial shape, and final shape of the workpiece to be processed, tools to be used for processing the workpiece from the initial shape to the final shape, and if necessary, information related to the tool holders, and the like. The processing information regarding the workpiece is information edited as an electronic file, and can be configured such that the processing information stored in a USB memory, for example, is read via an USB memory interface.

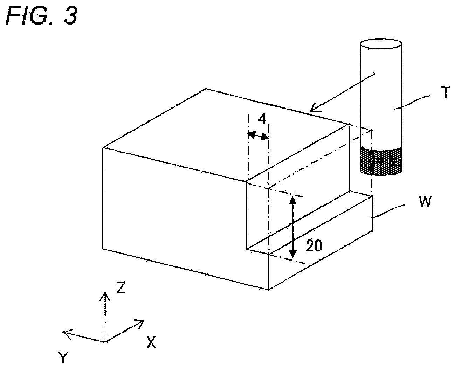

Fig. 3 shows processing information regarding the workpiece W related to the processing shape. The workpiece has an initial shape of a rectangular parallelepiped, and is to be processed with a cutting width of 4 mm and a cutting depth of 20 mm into a final shape with a step portion.

Subsequently, the working machines, tools, and tool holders suited to the processing information are extracted via the selection processing units 160, 230 from the database DB in which working machines, tools, and tool holders are registered, and are displayed on the display unit 120 in a selectable manner. A selection processing step of the operator selecting the working machine, tool, and tool holder to be evaluated from the working machines, tools, and tool holders displayed on the display unit 120 is executed (SA2).

The selection processing unit 230 is provided with a knowledge base for extracting applicable working machines, tools, and tool holders from the processing information including the material, initial shape, and final shape of the workpiece. In the selection processing step, the working machines, tools, and tool holders selectable based on the processing information are extracted from the database DB and displayed on the display unit 120.

For example, as compared to the processing information shown in Fig. 3, in performing side surface processing with a long cutting width and a narrow cutting depth such as in the case where the cutting width is 4 mm to 50 mm and the cutting depth is 20 mm to 2 mm, using a face mill may be preferable to using an end mill. In addition, if there is a risk that the tool will interfere with the workpiece as the processing advances, it is necessary to select a tool holder of an appropriate length in order to avoid the interference. If there is no risk of interference, it is preferable to select a tool holder that has high rigidity and is short in length. In this manner, it is possible to select appropriate processing machines, tools, and tool holders based on the processing information regarding the workpiece.

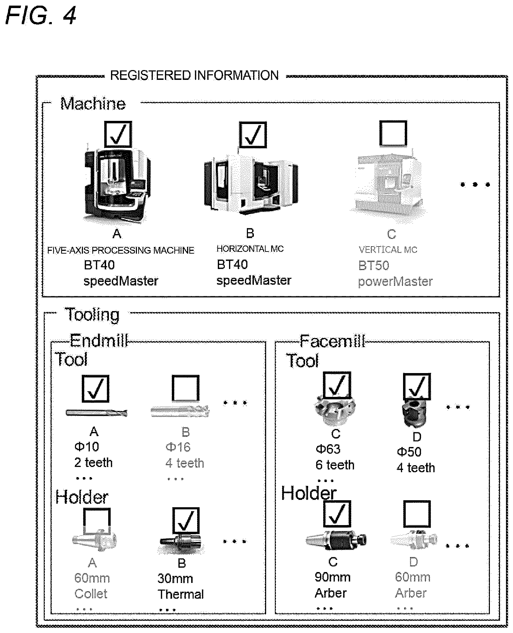

Fig. 4 shows an example of a list displayed on the display unit 120.

In the selection processing step, the working machines, tools, and tool holders determined as being owned by the customer based on the attribute information as well as the working machines, tools, and tool holders determined as not being owned by the customer are displayed on the display unit 120 in a selectable manner.

The working machines, tools, and tool holders determined to be appropriate are selected by the operator from the working machines, tools, and tool holders displayed on the display unit 120. Further, the selection processing step includes a process of selecting the working machines, tools, and tool holders recommended by the system as the working machines, tools, and tool holders suited to the processing information without involving the operator.

In Fig. 4, the working machines, tools, and tool holders with the marked checkboxes can be visibly recognized as the selected working machines, tools, and tool holders.

Subsequently, a processing process determination process of setting a plurality of processing parameters for each combination of the processing information and the selected one or more working machines, tools, and tool holders is executed by the selection processing units 160, 230 (SA3).

The processing parameters refer to a tool movement path, tool feed rate, rotation speed of a main shaft, and the like, for example. The selection processing unit 230 has a CAM function of generating a processing procedure based on the processing information and one or more selected working machines, tools, and tool holders, and the processing parameters are generated by the CAM function. The processing parameters generated by the CAM function are displayed on the display unit 120 and can be edited and operated by the operator. The CAM function realizes a processing process analysis step of analyzing the processing information and outputting the working machines, tools, and tool holders suited to the processing information. The processing process determination process may be executed by the processing simulator 250 described below.

A plurality of processing processes determined in the processing process determination process are executed by the processing simulator 250 (SA4), and the processing results are stored in the memory (SA5). Steps SA4 and SA5 are repeated until the simulation is completed for all of the processing processes (SA6). Then, based on the simulation results stored in the memory, the system control unit 210 executes evaluation processes such as a processing efficiency evaluation process (SA7), a tool lifespan evaluation process (SA8), a surface roughness evaluation process (SA9), and a processing accuracy evaluation process (SA10). Upon completion of all the evaluations (SA11), an output process step of outputting and displaying the evaluation information on the display unit 120 is executed (SA12). Detailed processing simulation will be described below.

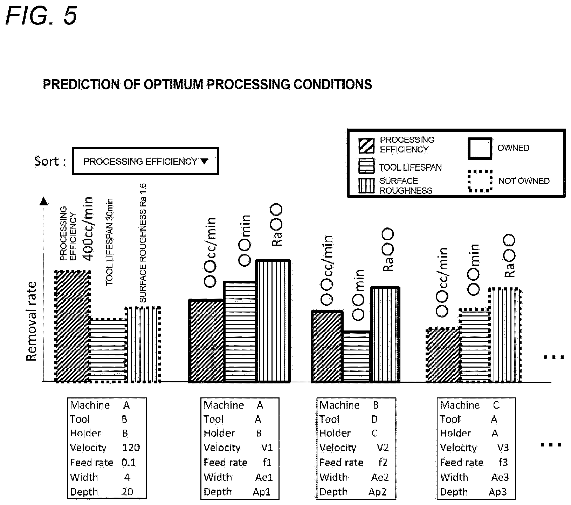

Fig. 5 shows suitability evaluation information that is generated based on the results of simulated processing performed by the processing simulator 250 and displayed on the display unit 120. The suitability evaluation information includes evaluation values of the processing efficiency, tool lifespans, surface roughness, and processing accuracy during processing of the workpiece by the selected working machines, tools, and tool holders. The selected working machines, tools, and tool holders are displayed in order based on an evaluation value of the suitability evaluation information. For example, when the processing efficiency is selected in the pulldown menu visible on the upper left part of Fig. 5, the machining environments are displayed in descending order of processing efficiency, and when the tool lifespan is selected, the machining environments are displayed in descending order of tool lifespan. The processing efficiency, tool lifespan, surface roughness, and processing accuracy displayed first constitute recommended cutting conditions.

As the suitability evaluation information, the working machines, tools, and tool holders owned by the customer and the working machines, tools, and tool holders not owned by the customer are displayed on the display unit 120 with gradation or colors so as to be identifiable. The term "not owned" refers to not owning any of the items as well as not owning some of the items. For example, the meaning of "not owned" includes a case where the working machines are owned but the tools and the tool holders are not owned.

The working machines, tools, or tool holders displayed on the display unit 120 in the output processing step are provided with link information for, upon being selected, guiding the operator to a guide website where the corresponding working machine or tool is sold. The guide website is configured such that at least the stock information, delivery dates, and prices can be checked.

Therefore, if the customer does not own a working machine, tool, or tool holder that has been determined as being preferable for the machining environment based on the suitability evaluation information displayed in the output processing step, the customer can select the working machine, tool, or tool holder to move to the corresponding sale website and can quickly check the stock, delivery date, and price, and purchase the necessary item.

A supplementary description will be provided regarding the processing simulator 250. In processing a workpiece using a working machine, minute vibrations may be generated in the blade of a tool. The vibrations include forced vibrations and regenerative chatter vibrations. The forced vibrations are generated by the working machine acting as a vibration source when the vibrational frequency of the tool is equal to the natural frequency of the tool. The regenerative chatter vibrations are generated when the relationship between the vibrational frequency of the tool and the cutting depth of the workpiece satisfies a predetermined condition. The processing simulator 250 includes the function of evaluating whether or not these vibrations have occurred.

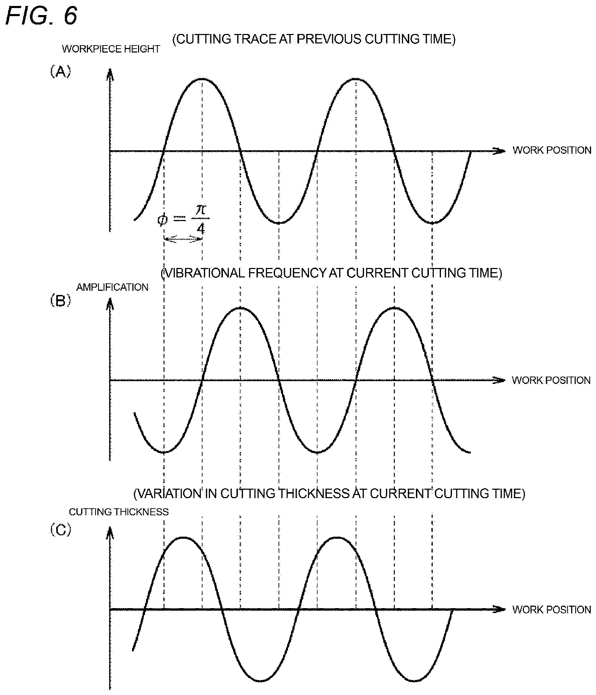

Figs. 6A to 6C are diagrams showing examples of processing conditions under which regenerative chatter vibrations are likely to occur. Fig. 6A shows the cutting trace on the workpiece at the previous cutting time. Fig. 6B shows the vibrational frequency of the tool at the current cutting time. Fig. 6C shows the cutting thickness of the workpiece resulting from cutting performed by the tool at the current cutting time.

The tool processes the workpiece by repeatedly cutting the workpiece while rotating. The tool vibrates while the workpiece is being processed, and the cutting surface of the workpiece rises and falls as shown in Fig. 6A.

When the tool cuts the workpiece the next time, the cutting trace at the previous cutting time and the vibrational frequency of the tool at the current cutting time may be misaligned. If this misalignment is expressed as "$\varphi$", the misalignment "$\varphi$" is $\pi/4$ (= 90 degrees) in the examples of Figs. 6A and 6B. In the event of such a misalignment, the cutting thickness of the workpiece will vary depending on the cutting position. Fig. 6C shows variations in the cutting thickness with a misalignment of $\varphi = \pi/4$. If the cutting thickness varies, the force applied from the workpiece to the tool during cutting varies and the regenerative chatter vibrations are likely to occur. In particular, when $\varphi = \pi/4$, the regenerative chatter vibrations are most likely to occur.

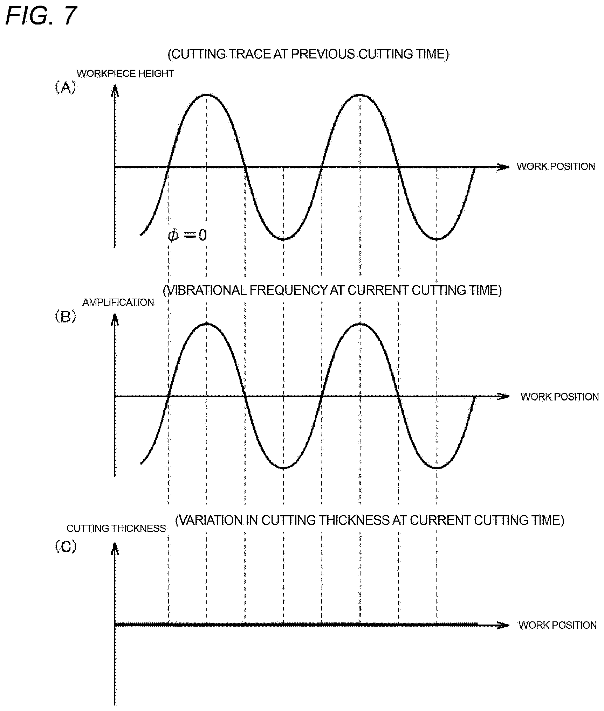

Figs. 7A to 7C are diagrams showing examples of processing conditions under which the regenerative chatter vibrations are unlikely to occur. Fig. 7A shows the cutting trace on the workpiece at the previous cutting time. Fig. 7B shows the vibrational frequency of the tool at the current cutting time. Fig. 7C shows the cutting thickness of the workpiece resulting from cutting by the tool at the current cutting time.

In the examples of Figs. 7A and 7B, the vibrational frequency of the tool overlaps the cutting trace at the previous cutting time. In this case, the misalignment "$\varphi$" is zero and the cutting thickness of the workpiece is constant. Thus, the force applied from the workpiece to the tool during cutting is constant and regenerative chatter vibrations are unlikely to occur.

That is, if the rotation number of the main shaft is adjusted such that the misalignment "$\varphi$" is close to zero, the regenerative chatter vibrations are unlikely to occur. On the other hand, if the rotation number of the main shaft is adjusted such that the misalignment "$\varphi$" is close to $\pi/4$, the regenerative chatter vibrations are likely to occur.

Typically, if "k" shown in the following equation (1) is an integer, the misalignment "$\varphi$" becomes zero:

$$k = 60 \text{ fc}/(n0 \text{ N}) \quad \dots (1)$$

The "k" shown in the equation (1) indicates the number of waves in the processed surface of the workpiece generated by vibrations of the tool from the contact between a first blade of the tool with the workpiece to the contact between a second blade with the workpiece. The "fc" indicates the vibrational frequency of the main shaft. The "N" indicates the number of blades of the tool. The "n0" indicates the rotation number of the main shaft. The rotation number here means the rotation number of the main shaft per unit time (for example, per minute), which is synonymous with the rotation speed. Since the tool moves together with the main shaft, the rotation number of the main shaft is equal to the rotation number of the tool. Therefore, the rotation number of the main shaft is synonymous with the rotation number of the tool.

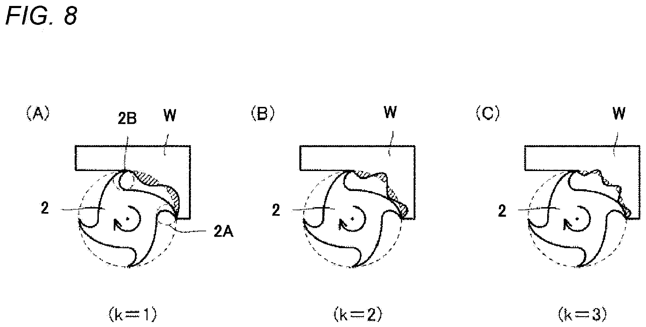

Figs. 8A to 8C are diagrams showing processing modes of the workpiece W where the "k" is an integer. Figs. 8A to 8C show the modes of the tool and workpiece W as viewed from the axial direction of the main shaft.

Fig. 8A shows the processing mode of the workpiece W where "k" is 1. As shown in Fig. 8A, if "k" is 1, the number of waves generated in the processed surface of the workpiece W by the vibrations of the tool from the contact between a blade 2A of the tool with the workpiece W to the contact between a blade 2B of the tool with the workpiece W is one.

Fig. 8B shows the processing mode of the workpiece W where "k" is 2. The rotation number of the tool in the processing mode of Fig. 8B is equivalent to half the rotation number of the tool in the processing mode of Fig. 8A. As shown in Fig. 8B, if "k" is 2, the number of waves in the processed surface of the workpiece W is two.

Fig. 8C shows the processing mode of the workpiece W where "k" is 3. The rotation number of the tool in the processing mode of Fig. 8C is equivalent to 1/3 of the rotation number of the tool in the processing mode of Fig. 8A. As shown in Fig. 8C, if "k" is 3, the number of waves in the processed surface of the workpiece W is three.

In all of the processing modes shown in Figs. 8A to 8C, the misalignment "φ" is zero and thus the regenerative chatter vibrations are unlikely to occur.

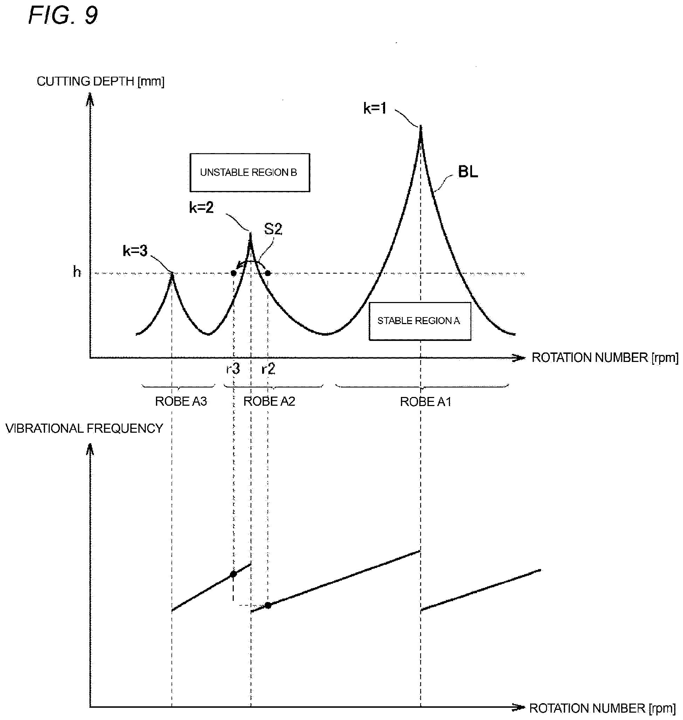

The upper part of Fig. 9 shows a region where the regenerative chatter vibrations occur and a region where the regenerative chatter vibrations do not occur in the relationship between the rotation number of the main shaft and the cutting depth of the workpiece W. The horizontal axis of the graph shown in Fig. 9 indicates the rotation number of the main shaft. The vertical axis of the graph shown in Fig. 9 indicates the cutting depth of the workpiece. The cutting depth (processing depth) here refers to the length of the contact portion between the tool and the workpiece W in the axial direction of the main shaft.

The range where the cutting depth of the workpiece falls below a boundary line BL indicates processing conditions under which the regenerative chatter vibrations are unlikely to occur. Hereinafter, the range will also be called a stable range A. The range where the cutting depth of the workpiece exceeds the boundary line BL indicates processing conditions under which the regenerative chatter vibrations are likely to occur. Hereinafter, the range will also be called an unstable range B. That is, an evaluation is made as to whether the rotation number of the main shaft falls under the stable region A or the unstable region B based on the processing condition, and the cutting conditions falling under the stable region A are extracted.

In the above-described embodiment, as an example, the processing simulator performs simulated processing of the workpiece using the working machines and tools selected via the selection processing unit based on the processing information input from the input processing unit, and the output processing unit evaluates whether or not vibrations have occurred based on the results of the simulated processing by the processing simulator and outputs the suitability evaluation information regarding the working machines and tools.

However, the present disclosure is not limited to the method using a processing simulator. The present disclosure may be configured to perform machine learning regarding the relationship between the processing conditions and the vibration occurrence states, evaluate whether or not vibrations have occurred from only the processing conditions based on the learning results, and generate and output, using the output processing unit, the suitability evaluation information regarding the working machines and tools based on the evaluation results.

The present disclosure may also be configured such that, based on digital information obtained by accurately expressing, in a computer, information regarding the shape and material of the workpiece, information regarding the configurations and operations of the working machines that process the workpiece, information regarding the shapes and materials of the tools and tool holders used with the working machines, and processing information regarding the workpiece, the computer uses a digital twin computing technology to process the workpiece in a digital information space and evaluate whether or not vibrations have occurred, and the output processing unit generates and outputs the suitability evaluation information regarding the working machines and tools based on the resulting evaluation results.

That is, the present disclosure may be configured such that the functional block "processing simulator 250" shown in Fig. 1 is replaced with a "machine learning device" or a "digital twin computer", and the output processing unit 240 generates and outputs the suitability evaluation information regarding the working machines and tools based on the results of processing the workpiece using the working machines and tools selected via the selection processing unit based on the processing information.

The embodiments and modes of the present disclosure have thus been described. However, the content of the present disclosure may vary in the details of the configuration. Combinations of elements, changes to procedures, and the like in the embodiments and modes can be implemented without deviating from the scope and ideas of the present disclosure claimed in the claims.

[Industrial Applicability]

As described above, according to the present disclosure, it is possible to achieve a machining environment support system and a machining environment support method by which it is possible to obtain suitability evaluation information that serves as an index for preparing an appropriate machining environment.

Preferred embodiments of the present disclosure at the present point in time have been described. However, the present disclosure is not to be interpreted as being limiting. Various modifications and improvements will become apparent to a person skilled in the technical field to which the present disclosure belongs upon reading the above disclosure. Therefore, the accompanying claims should be interpreted to include all modifications and improvements without deviating from the true spirit and scope of the present disclosure.

[Reference Signs List]

1: machining environment support system, 100: working machine, 110: operation panel, 120: display unit, 200: server computer, 210: system control unit, 150, 220: input processing unit, 160, 230: selection processing unit, 170, 240: output processing unit, 250: processing simulator (machine learning device, digital twin computer), 300: database system, DB: database, 400: tool sale website

## Claims

1. A machining environment support system configured to provide a customer with suitability evaluation information regarding a working machine and a tool for processing a workpiece to be evaluated, the machining environment support system comprising:

   a database in which pluralities of working machines and tools are registered;
   an input processing unit that inputs processing information regarding the workpiece;
   a selection processing unit that extracts a working machine and a tool suited to the processing information from the database and displays the same on a display unit in a selectable manner; and
   an output processing unit that generates and outputs the suitability evaluation information regarding the working machine and tool, based on a result of processing the workpiece using the working machine and tool selected via the selection processing unit based on the processing information,
   wherein the working machines and tools are registered in the database together with attribute information for determining an ownership state of the customer,
   the selection processing unit displays the working machine and tool determined as being owned by the customer based on the attribute information as well as the working machine and tool determined as not being owned by the customer, on the display unit in a selectable manner,
   the selection processing unit further displays a tool holder suited to the processing information in a selectable manner,
   the output processing unit is configured to generate the suitability evaluation information regarding the working machine, tool, and tool holder, based on the result of processing the workpiece using the working machine, tool, and tool holder selected via the selection processing unit,
   the tool holder is registered in the database together with attribute information for determining an ownership state of the customer, together with the working machines and the tools, and
   the selection processing unit is configured to display the working machine, tool, and tool holder determined as being owned by the customer based on the attribute information as well as the working machine, tool, and tool holder determined as not being owned by the customer, on the display unit in a selectable manner.

2. The machining environment support system according to claim 1, wherein the suitability evaluation information includes a recommended cutting condition according to the working machine, tool, and tool holder.

3. The machining environment support system according to claim 1 or 2, wherein the processing information includes a material, pre-processing shape, and post-processing shape of the workpiece, and the selection processing unit includes a processing process analysis unit that analyzes the processing information and outputs a list of the working machine, tool, and tool holder suited to the processing information.

4. The machining environment support system according to claim 1, wherein the suitability evaluation information includes evaluation values of processing efficiency, tool lifespan, surface roughness, and processing accuracy at a time of processing the workpiece using the selected working machine, tool, and tool holder.

5. The machining environment support system according to claim 4, wherein the output processing unit displays the selected working machine, tool, and tool holder in order on the display unit, based on an evaluation value of the suitability evaluation information.

6. The machining environment support system according to claim 5, wherein the working machine, tool, or tool holder displayed on the display unit by the output processing unit is provided with link information for, upon being selected, guiding the customer to a guide website where a corresponding working machine, tool, or tool holder is sold.

7. A machining environment support method for providing a customer with suitability evaluation information regarding a working machine and a tool for processing a workpiece to be evaluated, the machining environment support method comprising:

   an input processing step of inputting processing information regarding the workpiece;
   a selection processing step of extracting a working machine and a tool suited to the processing information from a database in which pluralities of working machines and tools are registered, and displaying the same on a display unit in a selectable manner; and
   an output processing step of generating and outputting the suitability evaluation information regarding the working machine and tool, based on a result of processing the workpiece using the working machine and tool selected in the selection processing step based on the processing information,

wherein the working machines and tools are registered in the database together with attribute information for determining an ownership state of the customer,

the selection processing step is configured to display the working machine and tool determined as being owned by the customer based on the attribute information as well as the working machine and tool determined as not being owned by the customer, on the display unit in a selectable manner,

the selection processing step further includes displaying a tool holder suited to the processing information in a selectable manner,

the output processing step is configured to generate the suitability evaluation information regarding the working machine, tool, and tool holder, based on the result of processing the workpiece using the working machine, tool, and tool holder selected in the selection processing step,

the tool holder is registered in the database together with attribute information for determining an ownership state of the customer, together with the working machines and the tools, and

the selection processing step is configured to display the working machine, tool, and tool holder determined as being owned by the customer based on the attribute information as well as the working machine, tool, and tool holder determined as not being owned by the customer, on the display step in a selectable manner.

8. The machining environment support method according to claim 7, wherein the suitability evaluation information includes a recommended cutting condition according to the working machine, tool, and tool holder.

9. The machining environment support method according to claim 7 or 8, wherein the processing information includes a material, pre-processing shape, and post-processing shape of the workpiece, and the selection processing step includes a processing process analysis step of analyzing the processing information and outputting a list of the working machine, tool, and tool holder suited to the processing information.

10. The machining environment support method according to claim 7, wherein the suitability evaluation information includes evaluation values of processing efficiency, tool lifespan, surface roughness, and processing accuracy at a time of processing the workpiece using the selected working machine, tool, and tool holder.

11. The machining environment support method according to claim 8, wherein the output processing step includes displaying the selected working machine, tool, and tool holder in order on the display unit, based on an evaluation value of the suitability evaluation information.

12. The machining environment support method according to claim 11, wherein the working machine, tool, or tool holder displayed on the display unit in the output processing step is provided with link information for, upon being selected, guiding the customer to a guide website where a corresponding working machine, tool, or tool holder is sold, and the guide website is configured such that at least stock information, delivery date, and price can be confirmed.

## FIG. 1

1

DATABASE
MANAGEMENT UNIT
(310)

DATABASE
(DB)

300

SYSTEM CONTROL UNIT (210)

INPUT PROCESSING UNIT
(220)

SELECTION PROCESSING UNIT
(230)

OUTPUT PROCESSING UNIT
(240)

PROCESSING SIMULATOR
(250)

200

TOOL SALE WEBSITE
(400)

TOOL SALE WEBSITE
(400)

TOOL SALE WEBSITE
(400)

INTERNET

100

105

101

102

103

2

104

120

110

INPUT PROCESSING UNIT
(150)

SELECTION
PROCESSING UNIT
(160)

OUTPUT
PROCESSING UNIT
(170)

NC DEVICE
(130)

SERVOCONTROL UNIT
(140)

*FIG. 2*

```
         ╭─────────────────────────╮
         │  MACHINING ENVIRONMENT  │
         │     SUPPORT PROCESS     │
         ╰─────────────────────────╯
                     │
SA1     ┌─────────────────────────┐
        │   WORKPIECE INFORMATION  │
        │      INPUT PROCESS       │
        └─────────────────────────┘
                     │
SA2     ┌─────────────────────────┐
        │  MACHINE/TOOL INFORMATION │
        │     SETTING PROCESS      │
        └─────────────────────────┘
                     │
SA3     ┌─────────────────────────┐
        │   PROCESSING PROCESS     │
        │  DETERMINATION PROCESS   │
        └─────────────────────────┘
                     │
SA4     ┌─────────────────────────┐
        │  PROCESSING SIMULATION   │
        │        PROCESS           │
        └─────────────────────────┘
                     │
SA5     ┌─────────────────────────┐
        │  STORE SIMULATION RESULT │
        │       IN MEMORY          │
        └─────────────────────────┘
                     │
SA6            ◇ SIMULATION              N
              ◇ COMPLETED FOR ALL ◇──────→
               ◇ CASES? ◇
                     │ Y
                     │
SA7     ┌─────────────────────────┐
        │  PROCESSING EFFICIENCY   │
        │    EVALUATION PROCESS    │
        └─────────────────────────┘
                     │
SA8     ┌─────────────────────────┐
        │  TOOL LIFE SPAN EVALUATION │
        │        PROCESS           │
        └─────────────────────────┘
                     │
SA9     ┌─────────────────────────┐
        │    SURFACE ROUGHNESS     │
        │    EVALUATION PROCESS    │
        └─────────────────────────┘
                     │
SA10    ┌─────────────────────────┐
        │   PROCESSING ACCURACY    │
        │    EVALUATION PROCESS    │
        └─────────────────────────┘
                     │
SA11         ◇ EVALUATION COMPLETE? ◇     N
                     │ Y
                     │
SA12    ┌─────────────────────────┐
        │  EVALUATION INFORMATION  │
        │     OUTPUT PROCESS       │
        └─────────────────────────┘
                     │
              ╭───────────╮
              │    END    │
              ╰───────────╯
```

*FIG. 3*

FIG. 4

REGISTERED INFORMATION

**Machine**

A
FIVE-AXIS PROCESSING MACHINE
BT40
speedMaster

B
HORIZONTAL MC
BT40
speedMaster

C
VERTICAL MC
BT50
powerMaster

...

**Tooling**

**Endmill**

Tool

A
Φ10
2 teeth
...

B
Φ16
4 teeth
...

...

Holder

A
60mm
Collet
...

B
30mm
Thermal
...

...

**Facemill**

Tool

C
Φ63
6 teeth
...

D
Φ50
4 teeth

...

Holder

C
90mm
Arber
...

D
60mm
Arber
...

...

FIG. 5

PREDICTION OF OPTIMUM PROCESSING CONDITIONS

*FIG. 6*

(A)

WORKPIECE HEIGHT

(CUTTING TRACE AT PREVIOUS CUTTING TIME)

WORK POSITION

$$\phi = \frac{\pi}{4}$$

(B)

AMPLIFICATION

(VIBRATIONAL FREQUENCY AT CURRENT CUTTING TIME)

WORK POSITION

(C)

CUTTING THICKNESS

(VARIATION IN CUTTING THICKNESS AT CURRENT CUTTING TIME)

WORK POSITION

## FIG. 7

(CUTTING TRACE AT PREVIOUS CUTTING TIME)

(A)

WORKPIECE HEIGHT

WORK POSITION

$\phi = 0$

(VIBRATIONAL FREQUENCY AT CURRENT CUTTING TIME)

(B)

AMPLIFICATION

WORK POSITION

(VARIATION IN CUTTING THICKNESS AT CURRENT CUTTING TIME)

(C)

CUTTING THICKNESS

WORK POSITION

*FIG. 8*

(A)                          (B)                          (C)

2B   W                            W                            W

2                                 2                            2

2A

(k＝1)                        (k＝2)                        (k＝3)

EP 4 390 588 A1

FIG. 9

19

## INTERNATIONAL SEARCH REPORT

| International application No. |
| --- |
| **PCT/JP2022/005741** |

**A. CLASSIFICATION OF SUBJECT MATTER**

*G05B 19/418*(2006.01)i; *G06Q 50/04*(2012.01)i
FI:   G05B19/418 Z; G06Q50/04

According to International Patent Classification (IPC) or to both national classification and IPC

**B. FIELDS SEARCHED**

Minimum documentation searched (classification system followed by classification symbols)

G05B19/418; G06Q50/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 6747894 B2 (FANUC LTD.) 26 August 2020 (2020-08-26) entire text, all drawings | 1-12 |
| A | WO 2000/12260 A1 (MORI SEIKI SEISAKUSHO KK) 09 March 2000 (2000-03-09) entire text, all drawings | 1-12 |
| A | JP 2004-265321 A (NIHON UNIVERSITY) 24 September 2004 (2004-09-24) entire text, all drawings | 1-12 |

☐ Further documents are listed in the continuation of Box C.      ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**11 April 2022** | Date of mailing of the international search report<br><br>**26 April 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

INTERNATIONAL SEARCH REPORT
Information on patent family members

International application No.

**PCT/JP2022/005741**

| Patent document cited in search report | | | Publication date (day/month/year) | Patent family member(s) | | | Publication date (day/month/year) |
|---|---|---|---|---|---|---|---|
| JP | 6747894 | B2 | 26 August 2020 | US | 2018/0010986 | A1 | |
| | | | | entire text, all drawings | | | |
| WO | 2000/12260 | A1 | 09 March 2000 | EP | 1027954 | A1 | |
| | | | | entire text, all drawings | | | |
| JP | 2004-265321 | A | 24 September 2004 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0012260 A
- JP 2004265321 A